# EUROPEAN PATENT APPLICATION

(11) **EP 1 245 848 A1**
(43) Date of publication of application: **02.10.2002**
(21) Application number: 01830232.3
(22) Date of filing: 04.04.2001
(51) Int. Cl.: F16C 35/00, F16C 35/04, F16C 33/72, F16C 33/76

(54) **Support for bearing**

(30) Priority: 29.03.2001 IT MI010659
(71) Applicant: Rexnord Marbett S.p.A., 42015 Correggio (Reggio Emilia) (IT)
(72) Inventor: Andreoli, Andrea, 41010 Villanova (MO) (IT)
(74) Representative: Maccalli, Marco

(57) **Abstract**

A support for bearing includes a support body (1) intended to house at least a bearing (2) for coupling a machine shaft (19;190) to a static part (100) of the machine. The support body (1) has a first side intended to engage by contact the static part of the machine and a second free side. The support for bearing includes a coverage cap (20;200) removably couplable to the support body from the second side, the cap having an exposed surface substantially free of recesses so that, in use, the support for bearing presents an exposed surface substantially free of recesses, cavities, interstices and similar.

## Description

The present invention relates to a support element for a bearing, both of the plain type and of the rolling type, for instance a ball bearing. Particularly, but not limitatively, the invention relates to a support element for a bearing for connecting to a static part of a machine a shaft provided with cogwheels, either drive or idle cogwheels, of the type used in belt conveying machines for moving the conveyor belt.

Support elements of the aforementioned type are generally formed of a body in which a seat for housing the bearing is obtained. The body is intended to be secured, by means of screws, bolts or similar, to a static part of the machine, for instance to the frame thereof.

The body is typically in synthetic material, and it is for instance formed by moulding of a polymeric material such as polyamide or polypropylene weighted with glass fibers to confer to the body a suitable sturdiness.

A problem affecting the known supports for bearing resides in the fact that they guarantee a scarce protection of the bearing supported thereby against agents present in the environment where the machine has to operate.

In fact, it has to be kept in mind that, for the need of limiting the production costs and for the better mechanical characteristics, the general' trend is to realize the bearings in non-stainless steels. Such materials are not particularly resistant to the action of environmental agents. The environment in which the machine, and consequently the bearing, has to operate can instead be relatively aggressive: for instance, in the case of conveying machines used in the preserved food industry, the liquids used for washing the installations or the liquids (water or soapy water) used for the lubrication thereof are particularly aggressive for the bearings where these are not adequately protected, being able to cause the oxidation thereof and therefore the onset of frictions or jammings. In the attempt to solve this first problem, added seal gaskets have been used.

Another problem of the known supports for bearing resides in the fact that the body intended to houses the bearing has a spatial conformation such as to have recesses, cavities, interstices. For instance, in order to secure the body to the static part of the machine by means of screws or bolts it is necessary to provide through holes and, in correspondence thereof, recesses for housing the screws or the bolts. Additionally, it is usual to provide relieves of material and structure stiffening ribs, that create additional recesses, cavities and interstices.

The presence of such recesses, cavities, interstices constitutes a problem since in use they become receptacles of dirt with consequent possibility of bacterial proliferation. This is undesirable in general, but in particular when the supports for bearing are employed in machines of installations for the production. or treatment of food products.

Moreover, in the known supports for bearing the body intended to house the bearing is generally shaped so to have the stiffening ribs in correspondence of the side of the body that, in use, faces the static part of the machine. Since the coupling between the support for bearing and the machine is not in general such to assure the seal against the infiltrations of external agents such as the already mentioned washing or lubrication liquids, also the recesses between the ribs become further receptacles of dirt and sites of bacterial. proliferation.

It has been therefore an object of the present invention to provide a support element for bearing that did not show the drawbacks evidenced by the supports for bearing realized according to the prior art.

According to the present invention, such an object has been attained by means of a support for bearing, comprising a support, body intended to house at least one bearing for coupling a machine shaft to a static part of the machine, the support body having a. first side intended to engage by contact the static part of the machine and a second, free side, characterized by comprising a coverage cap removably couplable to the support body from said second side, the cap having an exposed surface substantially free of recesses so that, in use, the support for bearing presents an exposed surface substantially free of recesses, cavities, interstices and similar.

Advantageously, seats are formed in the support body, open on said first and second sides, for securing means for securing the support body to the static part of the machine, such as screws, bolts or similar, the securing means being in use accessible from the second side of the support body. The cap is adapted to realize the substantially complete coverage of the support body, covering also the securing means and preventing therefore' stagnations of liquids or dirt in said seats.

Preferably the cap, when coupled to the support body, is adapted to realize a seal against infiltrations of liquids and dirt in a space between the cap and the support body.

Preferably the support body includes stiffening ribs in correspondence of said' second side, while in correspondence of said first side the support body is substantially flat.

Still more preferably the support body, in rigid material, comprises a layer of elastomeric material in correspondence of said first side.

The layer of elastomeric material can be moulded onto the support body.

Alternatively, where the support body is in synthetic material, the layer of elastomeric material and the support body can be formed by co-injection moulding.

Preferably the cap includes, in correspondence of one edge thereof, a rib projecting toward the inward of the cap and adapted to engage an external peripheral edge of said support body.

Said rib can in particular engage the external peripheral edge of the support body with interference, so as to realize the seal.

Preferably the external peripheral edge of the support body is constituted by a collar in said elastomeric material.

Alternatively, the layer of elastomeric material can form a lip along the perimeter of the support body adapted to adhere to an external surface of the cap, the rib of the cap realizing additionally a snap engagement with a groove formed along an external peripheral edge of the support body.

Preferably, the layer of elastomeric material extends to partially cover said seats for the securing means, in order to form a diaphragm adapted to engage threads of the securing means, thus realizing a seal against the infiltrations through said seats from the first side of the support body.

The cap can close the support for bearing in correspondence of said exposed surface or, where the shaft has to be a' pass-through shaft, the cap can comprise an opening for the passage of said shaft, sealing means being in such case associated with said opening to prevent infiltrations in the space between the support body and the cap.

The features and advantages of the present invention will be made evident by the following detailed description of possible embodiments thereof, illustrated merely by way of non-limitative example in the annexed drawings, in which:
figure 1 is a view in axonometry of a support body for a support for bearing according to a first embodiment of the invention;
figure 2 is a top-plan view of the support body of figure 1;
figure 3 is a view in axonometry from above of the support for bearing according to the first embodiment of the invention, including the support body of figures 1 and 2 with a coverage cap applied thereto;
figure 4 is a view in axonometry of the support for bearing of figure 3, sectioned by the plane of trace IV-IV of figure 2;
figure 5 is a view analogous to that of figure 4 of a detail of a support for bearing incorporating some modifications;
figure 6 is a view in axonometry from below of the support for bearing of figure 3, and
figure 7 shows a support for bearing according to a second possible practical embodiment of the invention, sectioned by a plane similar to the plane of trace IV-IV of figure 2.

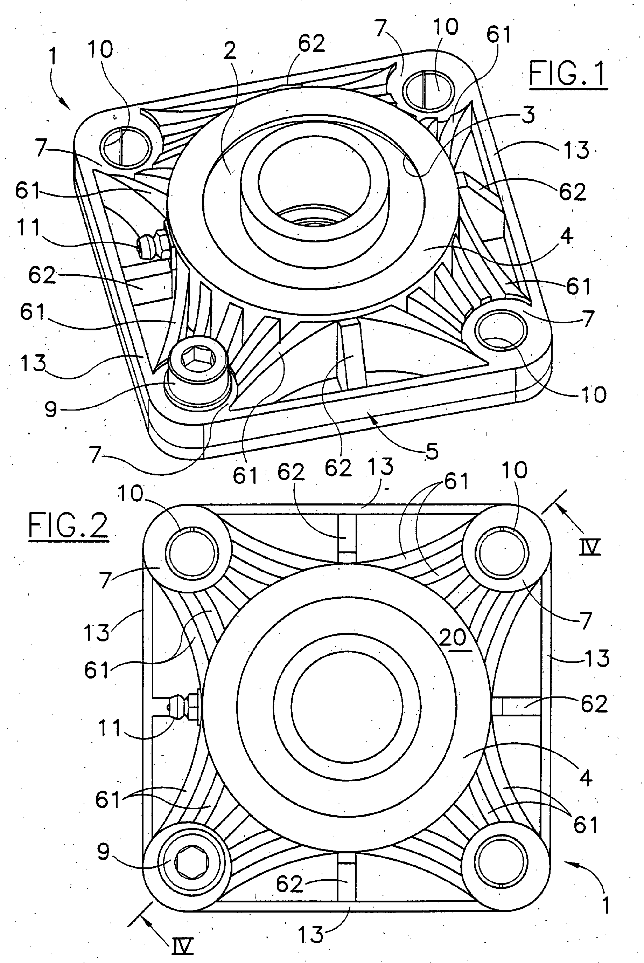

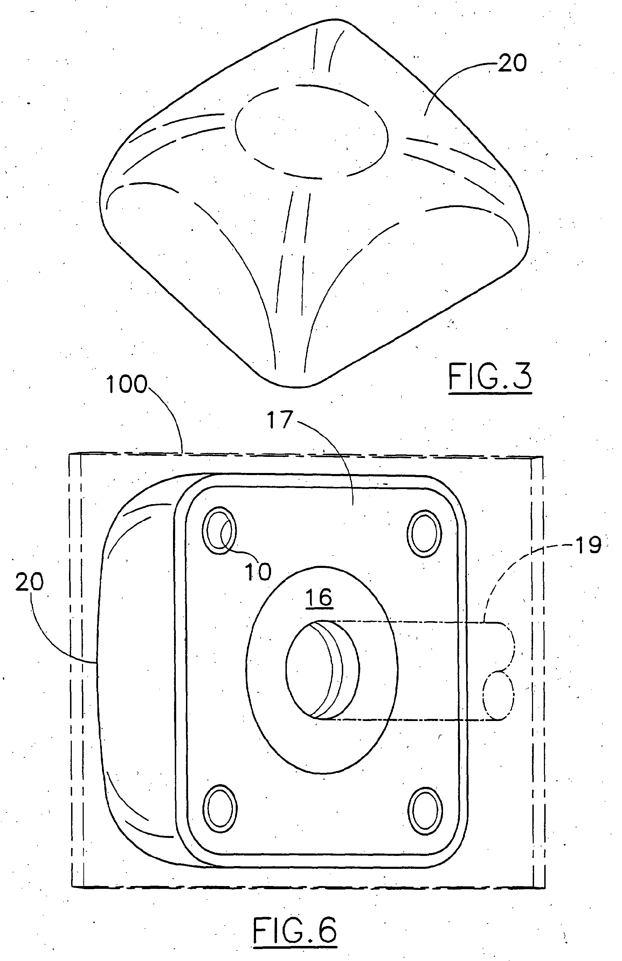

With reference to the drawings, and particularly to figures 1 to 6, a support for bearing according to a first possible practical embodiment of the invention comprises a body 1 intended to house a bearing 2 (represented only in schematic way in the drawings). The bearing can be of the plain type or of the rolling type, for instance a ball bearing.

In the shown example the body 1 has a generically square plan, but in general the body can have also other shapes, for instance it can have a rectangular, generically polygonal or generically circular plan.

The body 1 is preferably formed as a single piece of rigid synthetic material, for example a polymeric material such as polyamide or polypropylene, weighted with glass fibers to achieve a suitable stiffness.

In the body 1, substantially in a central position thereof, a chamber 3 is formed for housing the bearing 2. The chamber 3, which has shape and dimensions substantially complementary to the shape and external dimensions of the bearing 2, is laterally delimited by an annular wall 4, for instance cylindrical, rising from a base 5 of the body 1.

Perimetrally to the annular wall 4 ribs 61, 62 are provided for reinforcing the annular wall 4 and more generally for stiffening the structure of. the body 1. Particularly, in the shown example, the ribs 61 extend from the external surface of the annular wall 4 toward four cylindrical turrets 7, each one located in correspondence of a respective vertex of the body 1. In each of the turrets 7 a respective through hole 8 is provided, intended to house a screw 9 or other equivalent means such as for example a bolt, for securing the body 1 to a static part of a machine, for instance to the frame thereof (schematically shown in figure 6 and identified therein as 100). Preferably, inside the through hole 8 of each turret 7 a steel buckle 10 is inserted, to locally strengthen the body 1.

A nipple 11 for the greasing of the bearing 2 branches off radially from the annular wall 6. The nipple 11, by means of a through channel provided with in the annular wall 6 and not visible in 'the drawings, allows the feeding of grease to a groove 12 formed in the wall of the chamber 3, and thus to the bearing 2.

Along the whole periphery of the base 5 of the body 1 a frame 13 raises that, in correspondence of the vertexes of the body 1, is joined with the turrets 7. The ribs 62 connect the annular wall 4 to the frame 13. Additionally, along an external peripheral edge of the base 5 a groove 14 is formed.

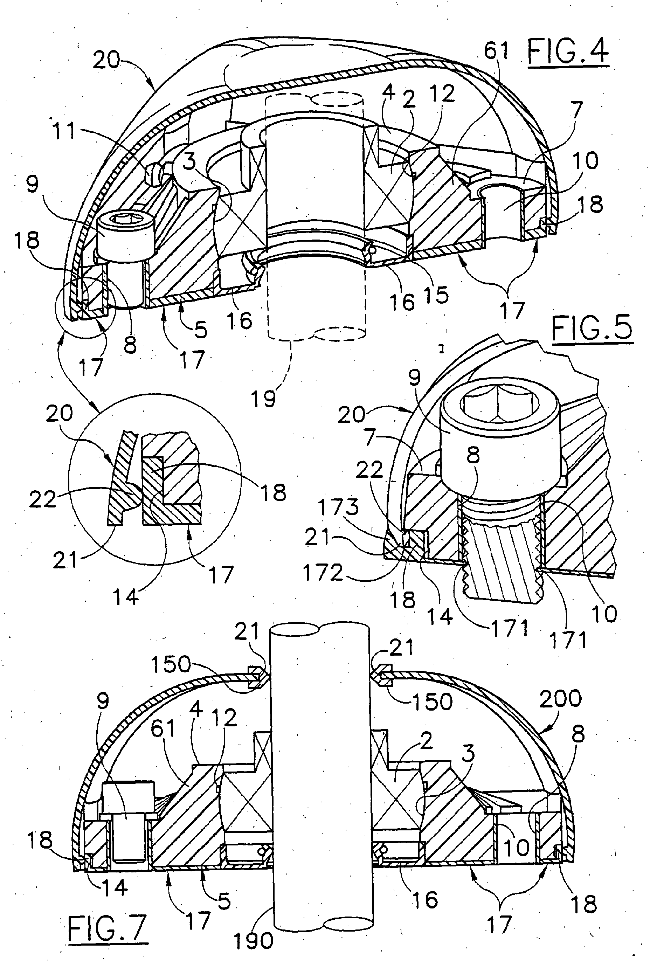

In the base 5, in correspondence of the chamber 3 an opening 15 is formed, for instance of generically circular shape, for the passage of a shaft 19 (schematically shown in dash-and-dot line in figure 4), for example a shaft carrying drive or idle gearwheels of the type used in belt conveyors for moving the conveyor belt. In correspondence of the opening 15 the chamber 3 houses a scraper ring 16.

To the lower surface of the base 5 a layer 17 of elastomeric material is applied, which additionally forms a collar 18 intended to be inserted into the groove 14 formed along the external peripheral edge of the base 5. In the exemplifying embodiment of figure 4 the layer 17 leaves substantially free the openings in correspondence of the base 5 of the through holes 8 for the securing screws and the opening 15, and the layer 17 also results flush with the extremities of the buckles 10 and with the scraper ring 15. Alternatively, as shown in figure 5, the layer 17 can extend to partially cover the openings in correspondence of the base 5 of the through holes 8, so as to form a diaphragm 171 that, engaging the threads of the securing screws 9, guarantees a higher seal against possible infiltrations via the through holes 8. In both cases, in correspondence of the layer 13 the support body 1 has a substantially flat surface without asperities, made exception for the openings provided in the layer 17 for the passage of the securing screws and for the passage of the shaft 19.

The support for bearing according to the invention also includes a coverage cap 20, having shape in plan substantially complementary to that of the body 1. The external surface of the cap 20, that is the convex surface thereof, is substantially smooth or however free of asperities, recesses, interstices.

The cap 20 can be realized in stainless steel. Alternatively, the cap 20 can also be realized in synthetic material, for instance polypropylene. Preferably, for the cap 20 a polymer not weighted with glass fibers will be used, such as simple propylene, possibly also recycling material that results from previous production cycles.

The cap 20 is adapted to be mounted on the body 1 to cover it and to substantially realize therewith a tight, seal engagement against the infiltrations of liquids in the space which is formed between the body 1 and the cap 20. This can be achieved in several ways, for instance by providing, as in the example of figure 4, in correspondence or in proximity of a peripheral edge 21 of the cap 20, a rib 22 projecting to the inward of the cap 20, such as to engage with interference the collar 18 of the layer 13 of elastomeric material. Other forms of, coupling between the cap 20 and the body 1 suitable to guarantee the tight, seal engagement against infiltrations are clearly conceivable, for instance by providing an O-ring in correspondence of the inner peripheral edge 21 of the cap or peripherally to the base 5 of the body 1. According to a variant, visible in figure 5, the layer of elastomeric material 17 slightly extends past the outer peripheral edge of the base 5 and comprises an annular groove 172 adapted to house the peripheral edge 21 of the cap 20. The external wall 173 of the groove 172 thus forms a lip that, adhering to the external surface of the cap 20, guarantees an even better tight engagement, particularly in the case in which the support body 1 does not have a generically circular plan. Preferably, the cap 20 will still be provided with the rib 22, and the groove 172 formed in the layer of elastomeric material will partially extend within the groove 14, so that the rib 22 can engage the groove 14 in snap-fitting way.

In use, after having inserted the bearing 2 in the body 1, the body 1 is inserted onto the shaft 19 and then it is secured to the static part (the frame, for instance schematically shown in dash-and-dot line in figure 6 and identified therein by 100) of the machine by means of the screws 9 or other similar means. The cap 20 is then applied to the body 1.

The cap 20 can be removed, for instance for allowing the access to the securing screws 9 and/or to the nipple of greasing.

In the support for bearing shown and described, although the body 1 that houses and supports the bearing 2 presents, from the side opposite to that intended for the engagement by contact with the static part of the machine, recesses, cavities and interstices which are potentially causes of stagnation of liquids and dirt in general, the cap 20 is adapted to completely cover the body 1, so that once that the cap 20 has been applied to the body 1 the support for bearing as a whole results free of recesses, cavities and interstices, presenting an exposed surface substantially smooth or however free of asperities, recesses, interstices. Particularly, the cap 20 also cover the accessible parts of the means for securing the body 1 to the static part of the machine, for instance the heads of the screws 9.

The tight, seal engagement between the cap 20 and the body 1 also guarantees that infiltrations of liquids in the space among the body 1 and the cap 20 do not occur.

In addition to this, the surface of the side of the support for bearing intended to face and to engage by contact the .static part of the machine, that is the exposed surface of the layer 17 of elastomeric material, results substantially flat. Thus, if on one hand the very presence of the layer 17 of elastomeric material already allows to guarantee a good seal against the infiltrations, the absence of recesses, interstices, cavities in correspondence of the side of the support for bearing that faces the static part of the machine prevents the formation of potential receptacles of dirt.

In figure 7 a support for bearing according to a second possible practical embodiment of the invention is shown that, differently from the previously described embodiment, is suitable for the use in combination with a passing-through shaft 190. In such case, the support for bearing includes a cap 200 provided with an opening 201 substantially in correspondence of the summit thereof, to allow the passage of the shaft 190. A scraper ring 150 analogous to the scraper ring 16 is associated with the opening 201, that guarantees the seal against infiltrations through the opening 201.

The support body 1 and the cap 20 or 200 can be .realized by moulding. The layer 13 of elastomeric material can be moulded onto the body 1 or the body 1 and the layer 13 can be realized by co-injection moulding of the two materials.

## Claims

1. Support for bearing, comprising a support body (1) intended to house at least a bearing (2) for coupling a machine shaft (19;190) to a static part (100) of the machine, the support body (1) having a first side intended to engage by contact said static part of the machine and a second free side, **characterized by** comprising a coverage cap (20;200) removably couplable to' the support body from said second side, the cap having an exposed surface substantially free of recesses so that, in use, the support for bearing presents an exposed surface substantially free of recesses, cavities, interstices and similar.

2. Support for bearing according to claim 1, in which in said support body (1) seats are formed (7,8), open on said first and second sides, for securing means (9) for securing the support body to the static part of the machine (100), said securing means being in use accessible from the second side of the support body, said cap being adapted to realize the substantially complete coverage of the support body, also covering the securing means.

3. Support for bearing according to claim 2, in which said cap (20;200), when coupled to the support body (1), is, adapted to realize a seal against infiltrations of liquids and dirt in a space between the cap and the support body.

4. Support for bearing according to claim 3, in which the support body (1) comprises, in correspondence of said second side, stiffening ribs (61,62), while in correspondence of said first side the support body is substantially flat.

5. Support for bearing according to claim 4, in which the support body (1) is in rigid material and comprises, in correspondence of said first side, a layer (17) of elastomeric material.

6. Support for bearing according to claim 5, in which the layer of elastomeric material (17) is moulded onto the support body (1).

7. Support for bearing according to claim 5, in which the support body (1) is in synthetic material, the layer of elastomeric material (17) and said support body being formed by co-injection moulding.

8. Support for bearing according to claim 5, in which the cap (20;200) comprises, in correspondence of one edge (21) thereof, a rib (22) projecting toward the inward of the cap and adapted to engage an outer peripheral edge of said support body (1).

9. Support for bearing according to claim 8, in which said rib (22) engages with interference the outer peripheral edge of the support body (1) so to realize the seal.

10. Support for bearing according to claim 9, in which said outer peripheral edge of the support body (1) is formed by a collar (18) in said elastomeric material.

11. Support for bearing according to claim 8, in which the layer of elastomeric material (17) forms a lip (173) adapted to adhere to an external surface of the cap (20), the rib (22) of the cap realizing a snap engagement with a groove (14) formed along an outer peripheral edge of the support body (1).

12. Support for bearing according to any one of claims 5 to 11, in which said layer of elastomeric material (17) extends to cover at least partially said seats (7,8) for the securing means (9), to form a diaphragm (171) adapted to engage with interference the securing means, thus realizing a seal against the infiltrations via said seats from said first side.

13. Support for bearing according to any one of the preceding claims, in which the cap (200) comprises an opening (201) for the passage of said shaft (190), seal means (150) being associated with said opening to prevent infiltrations in the space between the support body and the cap.
